# EUROPEAN PATENT APPLICATION

(11) **EP 1 575 047 A1**
(43) Date of publication of application: **14.09.2005**
(21) Application number: 05250664.9
(22) Date of filing: 05.02.2005
(51) Int. Cl.: G11B 20/10, G06F 13/10, H04N 5/00

(54) **Optical recording and/or reproducing apparatus having codec and IEEE1394 link in a single chip**

(30) Priority: 09.03.2004 KR 2004015780
(71) Applicant: SAMSUNG ELECTRONICS CO., LTD., Gyeonggi-do (KR)
(72) Inventor: Choi, Jun-ho, Seoul (KR)
(74) Representative: Waddington, Richard

(57) **Abstract**

An optical recording and/or reproducing apparatus, having a physical layer interface unit (160) for controlling data in a digital video format transmitted from an external equipment on a physical interface, and a main processing unit (120) including a logical layer interface unit (126) for controlling data in the DV format on a logical layer, and a codec (124) for compressing the data in the DV format output from the logical layer interface unit (126) in a predetermined compression format, and a recording medium (100a) is operable to record the compressed data in the digital video format in streams. Accordingly, IEEE1394 LINK (126) and codec (124) are implemented in one chip to process audio and/or video data in the digital video format, thereby significantly reducing cost.

## Description

The present invention relates to an optical recording and/or reproducing apparatus, and in particular, to an optical recording and/or reproducing apparatus including an IEEE1394 LINK and a codec in one chip to process audio and/or video data in a digital video (DV) format.

The optical recording and/or reproducing apparatus generally writes data on an optical disk or reproduces the recorded data using an optical disk driver. Data is recorded on the optical disk in streams, which provides high quality video/sounds.

In addition, the optical recording and/or reproducing apparatus may be connected to external equipment such as a camcorder, so that it has a function of reproducing audio and/or video data in a DV format photographed by the a camcorder. The DV format is used for formatting the data of the camcorder, and the data is recorded in the digital format, thereby providing high quality video/sounds.

In this case, the optical recording and/or reproducing apparatus receives audio and/or video data in the DV format from the camcorder by an IEEE1394 interface. The IEEE1394 interface includes an IEEE1394 LINK chip for performing interface control of a logical layer when it transmits audio and/or video data in the DV format. The audio and/or video data in the DV format converted to the IEEE1394 format by the IEEE1394 interface is processed by an MPEG codec so that the data is recorded on an optical disk or is provided to an external display such as a TV.

However, in the conventional optical recording and/or reproducing apparatus, the IEEE1394 LINK chip for controlling an interface of a logical layer among the IEEE1394 interfaces is separately arranged from the MPEG codec. As a result, design for the optical recording and/or reproducing apparatus becomes complicated, and a separate chip is required, thereby increasing cost when a product is implemented.

The present invention has been developed in order to solve the above and/or other drawbacks and problems associated with the conventional arrangement.

According to the present invention there is provided an apparatus and method as set forth in the appended claims. Preferred features of the invention will be apparent from the dependent claims, and the description which follows.

According to an aspect of the present invention, there is provided an optical recording and/or reproducing apparatus, which processes audio and/or video data in a DV format by implementing an IEEE1394 LINK and codec in one chip.

According to another aspect of the present invention, there is provided an optical recording and/or reproducing apparatus, including a physical layer interface unit controlling data on a physical interface in a DV format transmitted from external equipment; a main processing unit including a logical layer interface unit controlling data in the DV format on a logical layer, and a codec compressing the data in the DV format output from the logical layer interface unit in a predetermined compression format; and a recording medium recording the compressed data in the DV format by the codec in streams.

Preferably, the physical layer interface unit is an IEEE1394 PHY, and the logical layer interface unit is an IEEE1394 LINK, and the recording medium is at least one of an optical disk drive irradiating a predetermined light to record data in the DV format on an optical disk, hard disk drive, and external flash memory.

Preferably, the main processing unit further includes a controller controlling the logical layer interface unit so as to format data in the DV format transmitted from the physical layer interface unit to data that is recognized by the codec.

Preferably, the main processing unit is implemented as one chip where the codec, the logical layer interface unit, and the controller are embedded in one integrated circuit.

Preferably, the external equipment is a camcorder transmitting the data in the DV format.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:

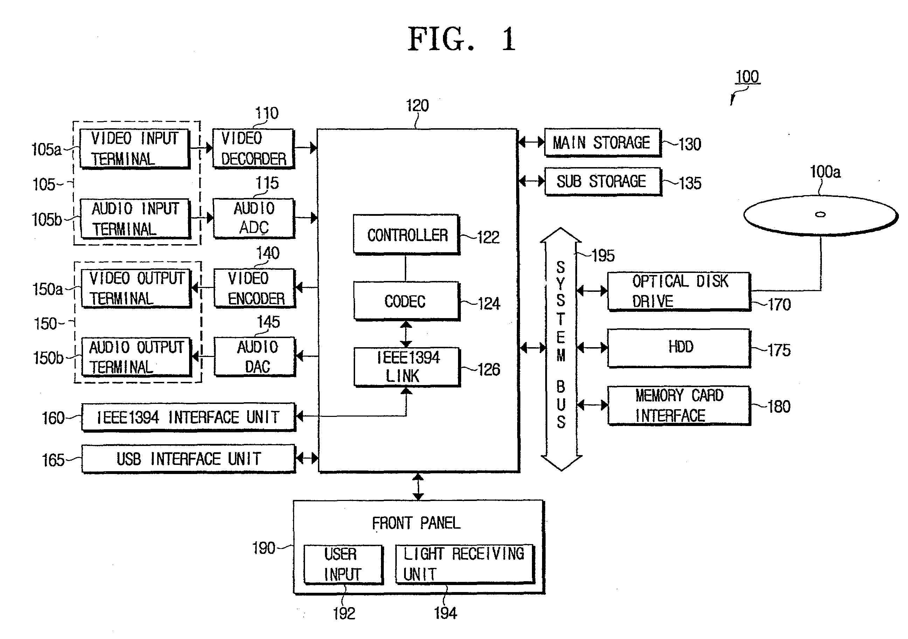

FIG. 1 is a schematic block diagram showing an optical recording and/or reproducing apparatus in accordance with an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

FIG. 1 is a schematic block diagram showing an optical recording and/or reproducing apparatus in accordance with an embodiment of the present invention.

Referring to FIG. 1, the optical recording and/or reproducing apparatus 100 in accordance with the present invention includes, an input terminal 105, a video decoder 110, an audio Analog Digital Converter (ADC) 115, a main processing unit 120, a main storage 130, a sub storage 135, a video encoder 140, an audio Digital Analog Converter (DAC) 145, an output terminal 150, a communication interface (not shown), an IEEE1394 interface unit 160, a USB interface unit 165, an optical disk drive 170, a hard disk drive (HDD) 175, a memory card interface 80, and a front panel 190.

First, the optical recording and/or reproducing apparatus 100 processes reproduction data recorded on an optical disk 100a to reproducible signals and provides the signals to a TV, and records recording data provided from a video source on the optical disk 100a. Herein below, the optical recording and/or reproducing apparatus 100 will be described mainly based on blocks associated with the present invention for simplicity of description.

Examples of the optical recording and/or reproducing apparatus 100 may include a Digital Video Disk Player (DVDP), a Digital Video Disk Recorder (DVDR), and a Digital Video Recorder (DVR), and examples of the optical disk 100a may include DVD, VCD, and CD based disks.

The input terminal 105 includes a video input terminal 105a and an audio input terminal 105b.

The video input terminal 105a receives various video signals provided from a predetermined video source and provides the video signals to the video decoder. Such a video input terminal 105a includes at least one of super video input terminal (not shown) receiving luminance signal (Y) and chrominance signal (Cr, Cb) in digitally separated types, a line video input terminal (not shown) receiving analog signals mixed with luminance signal (Y) and chrominance signal (Cr, Cb), a RF input terminal (not shown) receiving public broadcasting signals, and a terminal (not shown) receiving CVBS signals.

The audio input terminal 105b receives audio signals provided from a predetermined video source and provides the audio signals to the audio ADC 115.

The video source may include wired broadcast source, satellite broadcast source, digital broadcast source, Internet, setup box, and digital camcorder.

The video decoder 110 bypasses received video signals to the codec 124 when the received video signals are digital ones, and decodes them into digital signals when they are analog ones.

The audio ADC 115 bypasses received video signals to the codec 124 when the received video signals are digital ones, and converts them to digital signals when they are analog ones.

The main processing unit 120 processes user control signals received through the front panel 190, and controls general operation of the optical recording and/or reproducing apparatus 100 in response to control program stored in the main storage 130.

The main processing unit 120 is implemented such that a controller 122, a codec 124, and an IEEE1394 LINK 126 are embedded in one chip such as an integrated circuit (IC). Such one chip has a better performance as well as simplifies its peripheral components compared to a circuit configured to employ separate components, so that it is used as an essential component.

The controller 122 controls the operation of the codec 124 and the IEEE1394 LINK 126. In particular, the controller 122 controls the IEEE1394 LINK 126 so as to format the DV data transmitted from the IEEE1394 PHY 160 into signals that may be recognized by the codec 124.

The codec 124 compresses AV signals provided from the video decoder 110 and the audio ADC 115, or audio and/or video data signals (hereinafter, it will be referred to as DV data) provided from the IEEE1394 LINK 126 in a predetermined compression manner to generate MPEG streams.

By way of example, the codec 124 compresses video data provided from the video decoder 110 in a MPEG-2 Video standard, and compresses audio data provided from the audio ADC 115 in an AC-3 standard, which generates MPEG AC streams. Generated MPEG AV streams are recorded on the optical disk drive 170 or the HDD 175. In this case, the compression format is not limited to the MPEG-2, but may include MPEG-1 and MPEG-4.

When the AV data signals recorded in streams on the optical disk drive 170 or the HDD 175 in streams are to be reproduced, the codec 124 separates the AV data signals provided from the optical disk drive 170 or the HDD 175 into audio signals and video signals, and decompresses the separated audio signals and video signals in respective decompression formats. Decompression formats employed correspond to the above-mentioned compression formats. The codec 124 provides decompressed video signals and decompressed audio signals to the video encoder 140 and the audio DAC 145, respectively.

Furthermore, when AV signals recorded on the optical disk drive 170 are to be recorded onto the HDD 175, the codec 124 provides the AV signals from the optical disk drive 170 to the HDD 175. This is similarly applied to a case where recording AV signals on the HDD 175 are recorded onto the optical disk drive 170.

The IEEE1394 LINK 126 processes signals transmitted from the IEEE1394 PHY 160, which will be described later in detail.

The main storage 130 stores a control program and an operating system for controlling and managing general operations of the optical recording and/or reproducing apparatus 100, and flash memory is employed for the same in the present invention.

The sub storage 135 is a temporary storage that allows the main processing unit 120 to use it, and AV signals, for example, are temporarily stored when they are compressed or decompressed in the codec 124, and Synchronous Dynamic RAM (DRAM) is employed for the same.

The video encoder 140 encodes decompressed video signals output from the codec 124 and provides the encoded video signals to the video output terminal 150a.

The audio DAC 145 converts decompressed audio signals output from the codec 124 to analog audio signals and provides the analog audio signals to the audio output terminal 150b.

As mentioned above, examples of the AV signals output from the codec 124 to the audio DAC 145 and the video encoder 140 may include AV signals input through the input terminal 105, DV data input through the IEEE1394 PHY 160, AV signals recorded on the optical disk 100a, and AV signals recorded on the HDD 175.

The output terminal 150 includes a video output terminal 150a and an audio output terminal 150b.

The video output terminal 150a and the audio output terminal 150b provide analog AV signals output from the video encoder 140 and from the audio DAC 145 to a sound output means such as speaker and to a video display means such as Cathode Ray tube (CRT) and Liquid Crystal Display (LCD). By way of example, the video output terminal 150a includes at least one of super video output terminal (not shown) transmitting luminance signal (Y) and chrominance signal (Cr, Cb) in digitally separated types, a line video output terminal (not shown) transmitting analog signals mixed with luminance signal (Y) and chrominance signal (Cr, Cb), a RF output terminal (not shown) transmitting public broadcasting signals, and a terminal (not shown) transmitting CVBS signals.

The IEEE1394 PHY 160 is a physical layer interface performing IEEE1394 interface control on the physical layer, and is implemented as an IC. The IEEE 1394 PHY 160 supports fast speed transmission and has a superior bidirectional communication performance.

In the present invention, the IEEE1394 PHY 160 receives the DV data from a camcorder connected through the IEEE1394 interface port (not shown) and the IEEE1394 cable (not shown). To detail this, the IEEE1394 PHY 160 performs various functions including initialization of the IEEE1394 bus (not shown), bus arbitration, conversion from DV data transmitted in serial from the camcorder to eight bit signals in parallel, encoding and decoding the transceived DV data, and outputting and detecting of the bias voltage.

The IEEE1394 LINK 126 integrated with the codec 124 in the one chip is an IC performing interface control on the logical layer when the DV data communication is performed. The IEEE1394 LINK 126 performs various functions including generating and detecting of Error Correction Code from the DV data provided from the IEEE1394 PHY 160, assembly and decomposition of DV data packets, packet transceiving, and switching procedure for the DV data. The IEEE1394 LINK 126 performs a signal processing procedure to meet compression format set in the codec 124 thereby providing the DV data in error corrected packet types to the codec 124.

On the contrary, when AV signals compressed from the codec 124 are provided, The IEEE1394 LINK 126 converts the AV signals to DV format signals suitable for the camcorder connected thereto and provides them to the IEEE1394 PHY 160.

The USB interface unit 165 acts to support Universal Serial Bus communication with external equipment, and transceives AV signals in digital streams to thereby help enhance transmission speed.

The optical disk drive 170 records AV signals of compressed streams provided from the codec 124 on the optical disk 100a by means of optical pickup (not shown) in a recording mode. In addition, the optical disk drive 170 detects the recorded AV signals on the optical disk 100a, converts them to digital data, and provides them to the codec 124 in a reproducing mode.

Such optical disk drive 170 may include a servo processing unit performing various servo operations such as tracking servo and focusing servo, optical pickup, Digital Signal Processor (DSP), spindle motor, and so forth.

The HDD 175 is a recording medium that is employed in the optical recording and/or reproducing apparatus 100, and records AV signals in streams transmitted from the codec 124 as file type.

The memory card interface unit 180 converts communication standards of an external memory card (not shown) to an integrated ATAPI standard, and the memory card interface unit 180 is connected to the external memory card (not shown) by a predetermined socket (not shown). Examples of the external memory card (not shown) may include Multimedia Cards (MMC), Smart Media (SM) Cards, Memory Sticks (MS), Secure Digital (SD) Cards, Compact Flash (CF) Cards, Micro Drive (MD) cards, and so forth.

In accordance with the present invention, the optical disk drive 170, HDD 175, and memory card interface unit 180 are connected to the main processing unit 120 by the system bus 195 including ATAPI bus to thereby perform mutual data communication.

The front panel 190 is a user interface receiving instructions for selecting or setting functions from the user, which is supported by the optical recording and/or reproducing apparatus 100. The front panel 190 includes a user input 192 where various function keys, direction keys, and number keys are arranged, and a light receiving unit 194 receiving infrared rays such as operating instructions transmitted from a remote controller (not shown).

Hereinafter, a procedure will be described with reference to FIG. 1 in which DV data processed in the IEEE1394 LINK 126 is compressed by the codec 125 in a predetermined format to thereby record the DV data on the optical disk 100a.

When a user tries to record moving picture data photographed by camcorder on the optical disk 100a, the user connects an IEEE1394 interface (not shown) of the camcorder to an IEEE1394 interface port (not shown) of the optical recording and/or reproducing apparatus 100 by means of IEEE1394 cable (not shown). The user then inputs recording instructions through the user input 192 or a remote controller (not shown). As a result, the controller 122 controls general operations of the optical recording and/or reproducing apparatus so as to perform a recording operation.

When the moving picture data, namely DV data is transmitted from the camcorder through the IEEE1394 interface port (not shown), the IEEE1394 PHY interface unit 160 performs interface control for the DV data on the physical layer. The IEEE1394 LINK 126 performs interface control for the DV data provided from the IEEE1394 PHY 160 on the logical layer. In other words, the IEEE1394 LINK 126 converts the DV data to signals that may be recognized and compressed by the codec 124.

The codec 124 compresses the DV data provided from the IEEE1394 LINK 126 in a predetermined format and generates AV signals in streams. The codec 124 provides the generated AV signals to the optical disk drive 170 through the system bus 195.

The optical disk drive 170 records the AV signals in streams provided from the codec 124 onto the optical disk 100a.

As such, the IEEE1394 LINK controlling the DV data input from the camcorder on the interface of the logical layer, and the codec compressing the AV signals in a predetermined format, are implemented in one chip, which simplifies configuration of the hardware system.

As mentioned above, in accordance with the optical recording and/or reproducing apparatus of the present invention, AV codec and IEEE1394 LINK are implemented in one chip, which allows a circuit to be simplified and costs for the same to be reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical recording and/or reproducing apparatus, comprising:
a physical layer interface unit (160) for controlling a physical interface of data in a digital video (DV) format transmitted from external equipment;
a main processing unit (120) including a logical layer interface unit (126) controlling a logical interface of the data in the DV format, and a codec (124) compressing the data in the DV format output from the logical layer interface unit (126) to a predetermined compression format; and
a recording medium (100a) for recording the compressed data in the DV format by the codec (124) in streams.

2. The optical recording and/or reproducing apparatus as claimed in claim 1, wherein the physical layer interface unit is an IEEE1394 PHY (160), and the logical layer interface unit (126) is an IEEE1394 LINK.

3. The optical recording and/or reproducing apparatus as claimed in claim 1 or claim 2, wherein the recording medium is at least one of an optical disk drive (170) for irradiating a predetermined light to record data in the DV format on an optical disk (100a), a hard disk drive (175), or an external flash memory (180).

4. The optical recording and/or reproducing apparatus as claimed in any preceding claim, wherein the main processing unit (120) further includes a controller (122) for controlling the logical layer interface unit (126) to format data in the DV format transmitted from the physical layer interface unit (160) to data that are recognized by the codec (124).

5. The optical recording and/or reproducing apparatus as claimed in claim 4, wherein the main processing unit (120) is implemented as one chip where the codec (124), the logical layer interface unit (126), and the controller (122) are embedded in one integrated circuit.

6. The optical recording and/or reproducing apparatus as claimed in any preceding claim, wherein the external equipment is a camcorder for transmitting the data in the DV format.

7. An optical recording and/or reproducing apparatus, comprising:
a physical layer interface unit (160) for receiving digital video (DV) data from an external source and transmitting the DV data to a main processing unit (120);
a logical layer interface unit (126) for formatting the DV data transmitted from the physical layer interface unit (160);
a codec (124) for compressing the formatted DV data output from the logical layer interface unit (126) into a predetermined compression format generating data streams; and
a recording medium (100a) for recording the data streams, wherein the logical layer interface unit (126) and the codec (124) are embedded in one integrated circuit.

8. The optical recording and/or reproducing apparatus as claimed in claim 7, wherein the physical layer interface unit (160) is an IEEE1394 PHY, and the logical layer interface unit (126) is an IEEE1394 LINK.

9. The optical recording and/or reproducing apparatus as claimed in claim 7 or claim 8, wherein the main processing unit (120) includes the logical layer interface unit (126) and the codec (124).

10. The optical recording and/or reproducing apparatus as claimed in claim 9, wherein the main processing unit (120) further includes a controller (122) controlling the codec (124) and the logical layer interface unit (126) so as to format the DV data transmitted from the physical layer interface unit (160) into signals recognized by the codec.

11. The optical recording and/or reproducing apparatus as claimed in claim 10, wherein the main processing unit (120) is implemented as one chip where the codec (124), the logical layer interface unit (126), and the controller (122) are embedded in one integrated circuit.

12. The optical recording and/or reproducing apparatus as claimed in any one of claims 7 to 11, wherein the external source is a camcorder transmitting the data in the DV format.

13. The optical recording and/or reproducing apparatus as claimed in any one of claims 7 to 12, further comprising an input terminal (105) receiving audio and/or video signals from the external source.

14. The optical recording and/or reproducing apparatus as claimed in any one of claims 7 to 13, further comprising an output terminal (150) outputting audio and/or video signals to the external source.

15. The optical recording and/or reproducing apparatus as claimed in any one of claims 7 to 14, further comprising a storage unit (130) for storing a control program and an operating system for managing the optical recording and/or reproducing apparatus.

16. The optical recording and/or reproducing apparatus as claimed in any one of claims 7 to 15, wherein the physical layer interface unit (160) is operable to perform at least one of an initialization of an IEEE 1394 bus, bus arbitration, conversion from the DV data transmitted in serial for to eight bit signals in parallel form, encoding and decoding of transceived DV data, and outputting and detecting a bias voltage.

17. The optical recording and/or reproducing apparatus as claimed in any one of claims 7 to 16, wherein the logical layer interface unit (126) is operable to perform at least one of generating and detecting an Error Correction Code from the DV data, assembly and decomposition of DV data packets, packet transceiving, and switching procedure for the DV data.

18. A main processing unit comprising:
a logical layer interface unit (126) for receiving digital video (DV) data from a physical layer interface unit (160) and outputting digital video DV data, and
a codec (124) for compressing the DV data output from the logical layer interface unit (126) into a predetermined compression format generating data streams, wherein the logical layer interface unit (126) and the codec (124) are located on a single integrated circuit.

19. The main processing unit as claimed in claim 18, wherein the physical layer interface unit (160) is an IEEE1394 PHY, and the logical layer interface unit (126) is an IEEE1394 LINK.

20. The main processing unit as claimed in claim 18 or claim 19, further comprising a controller (122) controlling the codec (124) and the logical layer interface unit (126) so as to format the DV data transmitted from the physical layer interface unit (160) into signals recognized by the codec (124).
